# EUROPÄISCHE PATENTSCHRIFT

(11) **EP 2 369 706 B1**
(45) Veröffentlichungstag und Bekanntmachung des Hinweises auf die Patenterteilung: **13.01.2016**
(21) Anmeldenummer: 11155242.8
(22) Anmeldetag: 21.02.2011
(51) Int. Cl.: H02G 3/18

(54) **Geräteeinsatz für Installationsgeräte**
Device insert for installation devices
Appareillage pour appareils d'installation

(30) Priorität: 24.03.2010 DE 102010013431
(43) Veröffentlichungstag der Anmeldung: 28.09.2011
(73) Patentinhaber: OBO Bettermann GmbH & Co. KG, 58710 Menden (DE)
(72) Erfinder: Raschke, Jörg, 51674, Wiehl (DE)
(74) Vertreter: Patentanwälte Ruff, Wilhelm, Beier, Dauster & Partner mbB

(56) Entgegenhaltungen:
- EP-A2- 1 931 004
- DE-U- 7 335 872
- GB-A- 1 174 562

## Beschreibung

Die Erfindung betrifft einen Geräteeinsatz für Installationsgeräte mit einem Deckel, wobei der Deckel einen Rahmen zum Aufnehmen eines Bodenbelagsabschnitts aufweist.

Stand der Technik sind Geräteeinsätze mit einer festen Vertiefung im Deckel. Beispielsweise sind Geräteeinsätze mit Deckeln mit Vertiefungen für entweder 5 mm oder 10 mm Bodenbelag zu bekommen. Dadurch ergeben sich Mindesteinbautiefen des gesamten Geräteeinsatzes von 70 mm bzw. 75 mm, da unterhalb des Deckels noch genügend Raum für die Unterbringung von Gerätebechern mit Installationsgeräten sowie dann auch in die Installationsgeräte, beispielsweise Steckdosen, eingesteckte Kabelstecker vorhanden sein muss. Zwischengrößen sind nur durch zusätzliche Füllstücke möglich. Muss man beispielsweise einen Bodenbelag mit 8 mm Höhe verarbeiten, muss man einen Geräteeinsatz mit einer Vertiefung für 10 mm Bodenbelag und zusätzlich ein Füllstück von 2 mm Höhe bestellen und verwenden.

Aus der deutschen Gebrauchsmusterschrift DE 7335872 ist ein Geräteeinsatz für Installationsgeräte mit einem schwenkbar an einem Rahmen angelenkten Deckel bekannt. Der schwenkbare Deckel und der Rahmen sind miteinander verbunden und der Rahmen kann wiederum in einen Zwischenrahmen eingesetzt werden. Der Zwischenrahmen ist relativ zu einem im Boden versenkten Gehäuse in der Höhe einstellbar. Der mit dem schwenkbar angelenkten Deckel verbundene Rahmen stützt sich mittels mehrerer Einstellschrauben auf den Zwischenrahmen ab und kann dadurch zusammen mit dem Deckel in seiner relativen Lage zum Zwischenrahmen eingestellt werden. Dadurch soll sichergestellt werden, dass eine Oberkante des Rahmens und des daran schwenkbar angelenkten Deckels mit ihren Ebenen in Parallellage zur Oberfläche eines Fußbodens unabhängig von der Lage des im Boden angeordneten Gehäuses angeordnet werden können.

Aus der europäischen Offenlegungsschrift EP 1 931 004 A2 ist ein als Bodendose bezeichnete Geräteeinsatz für Installationsgeräte mit einem Deckel bekannt. Der Deckel ist schwenkbar an einem Rahmen angelenkt, wobei der Rahmen mittels Einstellschrauben in seiner Höhe relativ zu einem im Boden versenktem Gehäuse angeordnet werden kann. Auf diese Weise soll sichergestellt werden, dass der Rahmen zusammen mit dem daran schwenkbar angeordneten Deckel in seiner relativen Lage zum Gehäuse eingestellt werden kann.

Aus der britischen Patentschrift GB 1,174,562 ist ein Geräteeinsatz für Installationsgeräte bekannt, wobei ein Rahmen im Abstand zu einer Basisplatte angeordnet ist. Die Basisplatte ist auf einem Rohboden angeordnet und der Rahmen soll fluchtend mit einer Oberseite eines Estrichs angeordnet werden. Um einen Abstand des Rahmens zu der Basisplatte einstellen zu können, sind Distanzstücke vorgesehen, die zwischen der Bodenplatte und dem Rahmen angeordnet werden. In den Rahmen kann dann ein trogförmiger Deckel eingesetzt werden, der zum Aufnehmen eines Bodenbelagsabschnitts ausgebildet ist.

Mit der Erfindung soll ein flexibel einsetzbarer Geräteeinsatz geschaffen werden.

Erfindungsgemäß ist hierzu ein Geräteeinsatz für Installationsgeräte mit einem Deckel vorgesehen, wobei der Deckel einen Rahmen zum Aufnehmen eines Bodenbelagsabschnitts aufweist, bei dem der Deckel eine Bodenplatte aufweist, die lösbar in den Rahmen eingesetzt ist, wobei der Rahmen des Deckels eine Durchgangsöffnung aufweist, die mittels der Bodenplatte verschlossen ist, wobei der Rahmen und die Bodenplatte eine Vertiefung zum Aufnehmen des Bodenbelagsabschnitts bilden und wobei wenigstens ein Distanzstück vorgesehen ist, das lösbar zwischen Rahmen und Bodenplatte anordenbar ist.

Durch Vorsehen einer lösbar in den Rahmen eingesetzten Bodenplatte wird es möglich, den Rahmen an unterschiedliche Stärken eines Bodenbelags anzupassen, so dass auch Bodenbeläge unterschiedlicher Stärke immer bündig mit einer Oberkante des Geräteeinsatzes bzw. bündig mit den Geräteeinsatz umgebenden Bodenbelägen abschließen können. Indem die Bodenplatte lösbar in den Rahmen eingesetzt ist, können Mittel zum Höhenverstellen der Bodenplatte relativ zum Rahmen vorgesehen werden, um dadurch eine Vertiefung im Deckel in ihrer Höhe anpassen zu können. Auf diese Weise kann ein und derselbe Deckel eines Geräteeinsatzes für Bodenbeläge unterschiedlicher Stärke verwendet werden. Dadurch wird die Herstellung und auch die Lagerhaltung der erfindungsgemäßen Geräteeinsätze vereinfacht.

Indem der Rahmen eine Durchgangsöffnung aufweist, die mittels der Bodenplatte verschlossen ist, kann erreicht werden, dass unterhalb der Bodenplatte eine Ausnehmung entsteht, in die beispielsweise ein Winkelstecker an einem Kabel oder ein sehr hohes Installationsgerät eintauchen kann. Unterhalb der Bodenplatte wird dadurch mehr Raum geschaffen und die Mindesteinbauhöhe des Geräteeinsatzes verringert sich für kleiner werdende Bodenbelagstiefen. Beispielsweise muss ein Geräteeinsatz, der bei einem Bodenbelag von 10 mm Dicke eine Mindesteinbautiefe von 75 mm aufweist, bei einer Bodenbelagsstärke von 5 mm lediglich noch 70 mm tief eingebaut werden, da ja dann unterhalb der Bodenplatte zusätzliche 5 mm zur Verfügung stehen.

Das Vorsehen wenigstens eines Distanzstücks schafft eine einfache Möglichkeit, Bodenplatte und Rahmen relativ zueinander in Höhenrichtung zu verschieben.

In Weiterbildung der Erfindung ist der Rahmen mit wenigstens einer Aussparung zum Einsetzen des wenigstens einen Distanzstücks versehen.

Auf diese Weise kann das wenigstens eine Distanzstück sicher am Rahmen befestigt werden. Beispielsweise kann das wenigstens eine Distanzstück in eine Aussparung des Rahmens eingesetzt und beispielsweise auch in dieser Aussparung verrastet werden.

In Weiterbildung der Erfindung sind mehrere scheibenförmig ausgebildete Distanzstücke vorgesehen.

Scheibenförmig ausgebildete Distanzstücke können kompakt ausgebildet sein und beispielsweise können bei einem quadratischen Geräteeinsatz vier scheibenförmig ausgebildete Distanzstücke oder Distanzscheiben verwendet werden, um die Bodenplatte relativ zum Rahmen zu verschieben.

In Weiterbildung der Erfindung ist wenigstens ein rahmenförmig ausgebildetes Distanzstück vorgesehen.

Mittels eines rahmenförmig ausgebildeten Distarizstücks kann eine umlaufende Auflagefläche für die Bodenplatte geschaffen werden. Auch bei hohen Belastungen der Bodenplatte sind dadurch keine Verwerfungen der Bodenplatte zu befürchten.

In Weiterbildung der Erfindung sind mehrere streifenförmig ausgebildete Distanzstücke vorgesehen.

Mittels streifenförmiger Distanzstücke kann ein Kompromiss zwischen einer umlaufenden Auflagefläche und einer im Wesentlichen über die gesamten Seitenkanten des Rahmens sich erstreckenden Auflagefläche geschaffen werden. Streifenförmige Distanzstücke können beispielsweise in einfacher Weise mittels einer Sollbruchstelle mit einem Rahmen oder Eintegerahmen verbunden werden und dadurch abbrechbar gestaltet werden. Distanzstreifen schaffen gleichzeitig eine vergleichsweise große Auflagefläche für eine Bodenplatte.

In Weiterbildung der Erfindung weist das wenigstens eine Distanzstück eine zentrale Erhöhung und/oder eine zentrale Vertiefung auf.

Beispielsweise ist vorgesehen, dass das Distanzstück einen ringförmigen, im Wesentlichen ebenen Abschnitt aufweist und in einem zentralen Bereich einseitig eine Erhöhung. Ein anderes Distanzstück kann passend zu der Erhöhung eine Vertiefung auf seiner Unterseite aufweisen. Solche Distanzstücke können bei entsprechender Bemessung sicher aufeinander gestapelt werden, wenn dann die Erhöhung einer unteren Distanzscheibe in die Ausnehmung einer oberen Distanzscheibe eingreift. Selbstverständlich können die Distanzscheiben dann auch umgekehrt montiert werden, dass also die Vertiefung einer ersten Distanzscheibe nach oben offen ist und eine zweite, obere Distanzscheibe dann mit ihrer Erhöhung in diese Vertiefung der unteren Distanzscheibe eingesetzt wird. Möglich ist auch die Ausbildung von stapelbaren Distanzscheiben mit hutartigem Querschnitt.

In Weiterbildung der Erfindung ist wenigstens ein Distanzstück einstückig an den Rahmen angeformt und zwischen Rahmen und Distanzstück ist eine Sollbruchstelle vorgesehen.

Auf diese Weise lassen sich die Distanzstücke unverlierbar an dem Rahmen selbst befestigen. Je nachdem, wie hoch der einzusetzende Bodenbelag ist, kann ein Monteur erst unmittelbar auf der Baustelle ein oder mehrere Distanzstücke der erforderlichen Stärke vom Rahmen abbrechen und zwischen Rahmen und Bodenplatte anordnen. Dadurch können die Distanzstücke gemeinsam mit dem Rahmen hergestellt werden und die Lagerhaltung der erfindungsgemäßen Geräteeinsätze ist weiter vereinfacht.

In Weiterbildung der Erfindung ist das wenigstens eine Distanzstück als Einlegerahmen ausgebildet, wobei wenigstens ein Weiteres Distanzstück einstückig an den Einlegerahmen angeformt und zwischen Einlegerahmen und Distanzstück eine Sollbruchstelle vorgesehen ist. Vorteilhafterweise sind an den Einlegerahmen mehrere Distanzstreifen angeformt.

Auf diese Weise können Distanzstücke für unterschiedliche Bodenbelagsdicken an einem einzigen Bauteil vorgesehen werden. Der Einlegerahmen ist zweckmäßigerweise so ausgebildet, dass er sich beim Einlegen in den Rahmen des Deckels selbst zentriert. Die Distanzstreifen können zusätzlich mit Vorsprüngen und/oder Vertiefungen versehen sein, die dann in passende Vertiefungen bzw. Vorsprünge an dem Einlegerahmen eingreifen, um die Distanzstreifen am Einlegerahmen fixieren zu können. Diese Vorsprünge und/oder Ausnehmungen dienen lediglich zur Montage, da im montierten Zustand Bodenplatte, Distanzstücke und Rahmen des Deckels mittels durchgesteckter Schrauben miteinander verbunden werden.

In Weiterbildurig der Erfindung ist der Rahmen oder Einlegerahmen gemeinsam mit dem wenigstens einen angeformten Distanzstück und der Sollbruchstelle als Kunststoffspritzgussteil ausgebildet.

Als Kunststoffspritzgussteil lassen sich sowohl der Rahmen als auch die angeformten Distanzstücke in hoher Präzision kostengünstig fertigen.

In Weiterbildung der Erfindung sind wenigstens zwei Distanzstücke unterschiedlicher Stärke an den Rahmen angeformt.

Auf diese Weise sind keine separaten Distanzstücke erforderlich, um Bodenbeläge unterschiedlicher Höhe bündig mit einer Oberseite des Geräteeinsatzes anordnen zu können. Unterschiedliche Kombinationen der Distanzstücke unterschiedlicher Stärke können dabei einen weiten Bereich von Bodenbelagsstärken abdecken.

In Weiterbildung der Erfindung ist der Rahmen im Querschnitt L-förmig ausgebildet, wobei die Bodenplatte auf einem horizontalen Schenkel des Rahmens, gegebenenfalls unter Zwischenfügen wenigstens eines Distanzstücks, aufliegt.

Eine L-förmige Gestaltung des Rahmens erlaubt eine stabile Ausführung und schafft eine ausreichend große, stabile Auflagefläche für die Bodenplatte. Innerhalb des L-förmigen Rahmens kann die Durchgangsöffnung definiert sein.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen dargestellten Ausführungsformen lassen sich in beliebiger Weise kombinieren, ohne den Rahmen der Erfindung zu überschreiten. In den Zeichnungen zeigen:
- Fig. 1: eine perspektivische Ansicht von schräg oben auf einen erfindungsgemäßen Geräteeinsatz gemäß, einer ersten Ausführungsform,
- Fig. 2: einen Deckel für den Geräteeinsatz der Fig. 1 in auseinandergezogener Darstellung,
- Fig. 3: eine perspektivische Ansicht eines Rahmens für den Deckel der Fig. 2,
- Fig. 4: eine Draufsicht auf den Deckel der Fig. 2,
- Fig. 5: eine abschnittsweise Ansicht der Schnittebene A-A aus Fig. 4, wobei eine Bodenplatte und ein Rahmen des Deckels in einer ersten Lage relativ zueinander angeordnet sind,
- Fig. 6: eine weitere Ansicht auf die Schnittebene A-A in Fig. 3, wobei eine Bodenplatte und ein Rahmen in einer zweiten Lage relativ zueinander angeordnet sind,
- Fig. 7: eine weitere Ansicht auf die Schnittebene A-A aus Fig. 3, wobei eine Bodenplatte und ein Rahmen in einer dritten Lage relativ zueinander angeordnet sind und
- Fig. 8: eine weitere Ansicht auf die Schnittebene A-A aus Fig. 3, wobei eine Bodenplatte und ein Rahmen in einer vierten Lage relativ zueinander angeordnet sind,
- Fig. 9: eine Draufsicht auf einen Einlegerahmen für einen erfindungsgemäßen Geräteeinsatz gemäß einer zweiten Ausführungsform,
- Fig. 10: eine Ansicht auf die Schnittebene A-A in Fig. 9,
- Fig. 11: eine Ansicht des Eintegerahmens der Fig. 9 von schräg vorne,
- Fig. 12: eine Draufsicht auf einen Deckel des Geräteeinsatzes gemäß der zweiten Ausführungsform mit dem Einlegerahmen aus Fig. 9,
- Fig. 13: eine abschnittsweise Ansicht der Schnittebene A-A aus Fig. 12, wobei eine Bodenplatte und ein Rahmen des Deckels in einer ersten Lage relativ zueinander angeordnet sind,
- Fig. 14: eine weitere Ansicht auf die Schnittebene A-A aus Fig. 12, wobei eine Bodenplatte und ein Rahmen in einer zweite Lage relativ zueinander angeordnet sind,
- Fig. 15: eine weitere Ansicht auf die Schnittebene A-A aus Fig. 12, wobei eine Bodenplatte und ein Rahmen in einer dritten Lage relativ zueinander angeordnet sind und
- Fig. 16: eine weitere Ansicht auf die Schnittebene A-A aus Fig. 12, wobei eine Bodenplatte und ein Rahmen in einer vierten Lage relativ zueinander angeordnet sind.

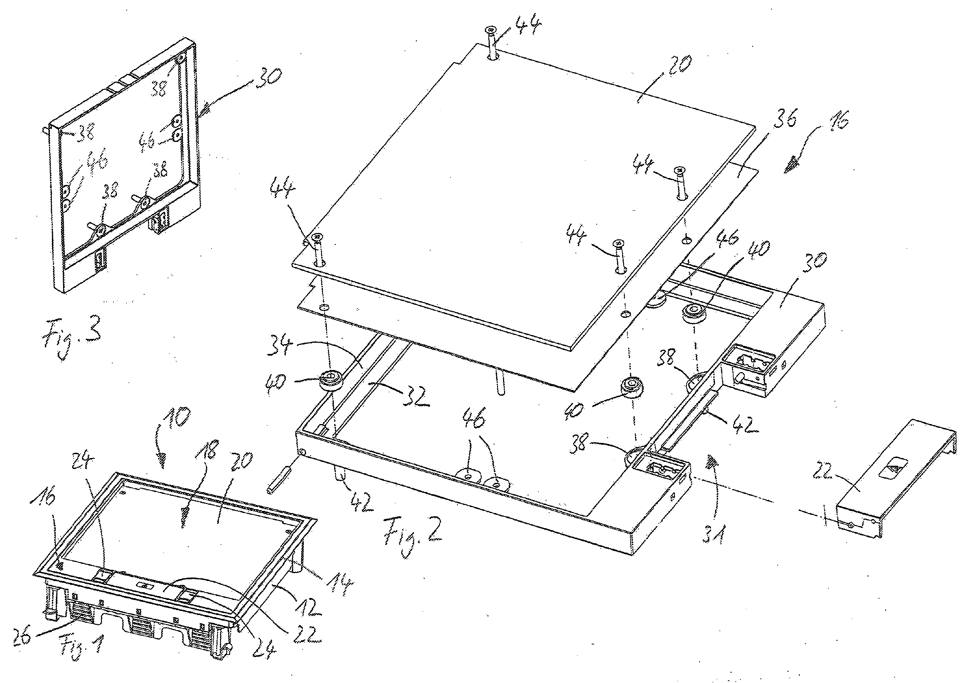

In der Darstellung der Fig. 1 ist ein erfindungsgemäßer Geräteeinsatz 10 dargestellt, der ein Gehäuse 12 mit einem an einer Oberseite des Gehauses umlaufenden Auflagerand 14 und einen Deckel 16 aufweist. Der Deckel 16 ist schwenkbar an dem Gehäuse 12 angelenkt und weist eine Vertiefung 18 auf, in die ein Abschnitt eines Bodenbelags eingelegt werden kann. Die Vertiefung 18 wird von einem umlaufenden Rahmen sowie von einer Bodenplatte 20 begrenzt. Je nachdem, wie dick der in die Vertiefung 18 einzulegende Bodenbelag ist, muss die Boden platte 20 in einer anderen Position angeordnet werden, damit eine Oberkante des Boderibeiags bündig mit einer Oberkante des Anlegerahmens 14 ist.

Der Deckel 16 ist weiter mit einer Kabelauslassklappe 22 versehen und kann mittels Verriegelungsschiebern 24 arretiert oder freigegeben werden.

Das Gehäuse 12 des Geräteeinsatzes 10 ist in bekannter Weise mit Rastleitern 26 zum Einhängen von Gerätebechern versehen, in die dann Installationsgeräte, beispielsweise Steckdosen, eingebaut werden können.

In der Darstellung der Fig. 2 ist der Deckel 16 in auseinandergezogener Darstellung abgebildet. Der Deckel 16 weist einen umlaufenden Rahmen 30 auf, in den die Bodenplatte 20 eingesetzt werden kann. Der Rahmen 30 definiert eine Durchgangsöffnung und weist an jedem seiner Schenkel einen etwa L-förmigen Querschnitt auf. Lediglich in seinem vorderen Bereich, in den die Kabelauslassklappe 22 eingesetzt wird, weist der Rahmen 30 zusätzlich zu seinem L-förmigen Abschnitt einen rechteckigen Abschnitt mit einer Ausnehmung 31 auf, in die dann die Auslassklappe 22 eingesetzt wird. Die L-förmige Ausbildung des Rahmens 30 stellt einen umlaufenden, horizontalen Schenkel 32 und einen ebenfalls umlaufenden, vertikal angeordneten Schenkel 34 bereit. Die Bodenplatte 20 wird unter Zwischenfügung einer Isolierschicht 36 auf den horizontalen Schenkel 32 aufgelegt. Die Isolierschicht 36 wird in der Regel benötigt, da die Bodenplatte 20 aus leitfähigem Material, speziell Blech, besteht und dadurch die Zwischenfügung der Isolierschicht 36 erforderlich ist, um den Sicherheitsanforderungen beim Einbau von elektrischen und elektronischen Installationsgeräten zu genügen.

Der umlaufende horizontale Schenkel 32 ist mit insgesamt vier Aussparungen 38 versehen, von denen in der Darstellung der Fig. 2 lediglich zwei zu erkennen sind. In diese Aussparungen 38 können Distanzscheiben 40 eingesetzt werden, deren Außenumfang an den Innenumfang der Aussparungen 38 angepasst ist. Die Aussparungen 38 werden zur Unterseite des Deckels hin durch Gewindedome 42 fortgesetzt, die dafür vorgesehen sind, Gewindeschrauben 44 Halt zu geben. Die Gewindeschrauben 44 erstrecken sich durch Durchgangsöffnungen in der Bodenplatte 20 und in der Isolierschicht 36 und können die Bodenplatte 20 gegen den Rahmen 30 ziehen und diese dadurch sicher am Rahmen 30 befestigen.

Der Rahmen 30 ist als Kunststoffspritzgussteil ausgebildet und insgesamt weitere vier Distanzscheiben 46, von denen in Fig. 2 lediglich drei erkennbar sind, sind an den Rahmen 30 mit angespritzt. Die Distanzscheiben 46 sind flacher als die Distanzscheiben 40. Werden daher anstelle der Distanzscheiben 40 die Distanzscheiben 46 in die Aussparungen 38 eingesetzt, kann die Bodenplatte 20 in einem geringeren Abstand oberhalb des Schenkels 32 des Rahmens 30 angeordnet werden. Die Distanzscheiben 40 und 46 lassen sich auch aufeinander setzen und dann gemeinsam in die Aussparungen 38 einsetzen, um noch einen weiteren Abstand zwischen Bodenplatte 20 und Rahmen 30 und damit noch eine weitere Tiefe der Vertiefung 18 im Deckel 16 zu realisieren.

Fig. 3 zeigt eine perspektivische Ansicht des Rahmens 30. In dieser Ansicht sind die vier angespritzten Distanzscheiben 46, die in die Durchgangsöffnung hineinragen, die von dem umlaufenden Rahmen 30 definiert wird, sowie die Lage der vier Aussparungen 38 im Rahmen 30 zu erkennen. Die Distanzscheiben 46 sind mittels einer Sollbruchstelle mit dem Rahmen 30 verbunden und können dadurch in einfacher Weise und ohne Zuhilfenahme von Werkzeug vom Rahmen 30 abgebrochen und dann in die Aussparungen 38 eingesetzt werden.

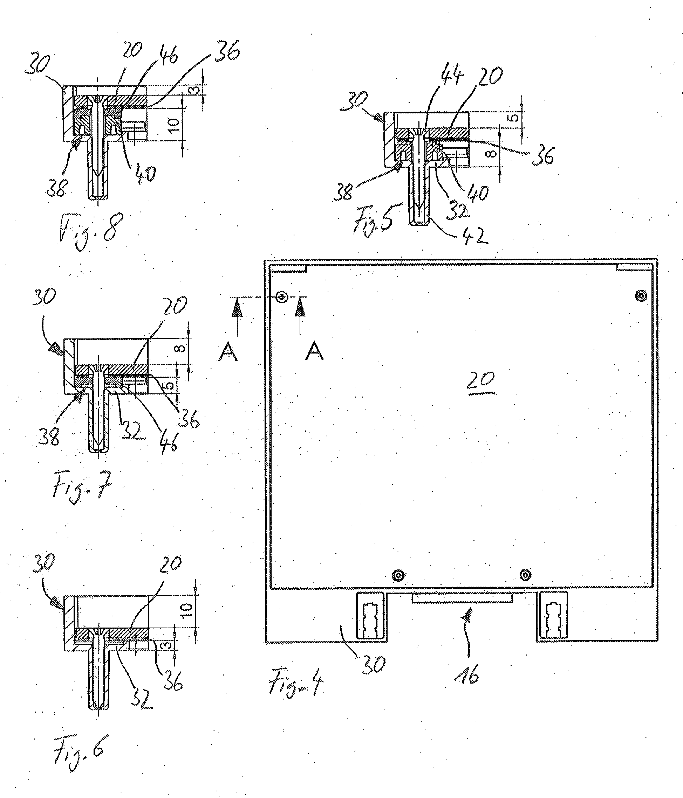

In Fig. 4 ist der Deckel 16 in einer Draufsicht dargestellt. Eine Schnittebene A-A läuft durch eine der in Fig. 4 nicht sichtbaren Aussparungen 38. Fig. 5 bis 8 zeigen dann Ansichten auf die Schnittebene A-A, wenn die Bodenplatte 20 relativ zum Rahmen 30 unterschiedlich positioniert ist.

Die Ansicht der Fig. 5 zeigt eine Lage der Bodenplatte 20, die dadurch erreicht wird, dass die Distanzscheiben 40 in den Aussparungen 38 des horizontalen Schenkels 32 des Rahmens 30 angeordnet werden. Zwischen einer Unterseite der Isolierschicht 36 und einer Unterkante des Rahmens 30 sind dadurch noch 8 mm Platz und zwischen einer Oberseite der Bodenplatte 20 und einer Oberkante des Rahmens 30 liegt ein Abstand von 5 mini. Mit den Distanzscheiben 40 kann der Deckel 16 daher für eine Bodenbelagsstärke von 5 mm vorbereitet werden.

In der Darstellung der Fig. 5 zu erkennen sind auch die Schrauben 44, die sich durch Durchgangsöffnungen in der Bodenplatte 20, der Isolierschicht 36 sowie der Distanzscheibe 40 erstrecken und dann in den an den Rahmen 30 angespritzten Gewindedom 42 eingeschraubt sind.

Der zwischen der Unterseite der Isolierschicht 36 und der Unterseite des Rahmens 30 vorhandene Abstand von 8 mm kann dazu genutzt werden, um die Mindesteinbautiefe des Geräteeinsatzes 20 zu verringern. Denn in diese Ausnehmung, die dann durch den umlaufenden Rahmen 30 und die Unterseite der Isolierschicht 36 gebildet wird, können sich beispielsweise Winkelstecker von Kabeln oder sehr hohe Installationsgeräte hinein erstrecken.

Die Darstellung der Fig. 6 zeigt eine Ansicht auf die Schnittebene A-A, wenn der Deckel 16 für eine Bodenbelagsstärke von 10 mm vorbereitet ist. Die Distanzscheibe 40 wurde zwischen Rahmen 30 und Isolierschicht 36 bzw. Bodenplatte 20 entfernt, so dass die Isolierschicht 36 nun unmittelbar auf dem horizontalen Schenkel 32 des Rahmens 30 aufliegt. Zwischen einer Oberseite der Bodenplatte 20 und einer Oberkante des Rahmens 30 liegen dadurch 10 mm. Die Vertiefung im Deckel 16 ist dadurch 10 mm tief und kann durch einen Bodenbelag entsprechender Stärke aufgefüllt werden.

Zwischen einer Unterseite der Isolierschicht 36 und einer Unterkante des Rahmens 30 liegen lediglich noch 3 mm, die aber ebenfalls zum Eintauchen von Kabelwinkelsteckern genutzt werden können.

Die Darstellung der Fig. 7 zeigt eine Ansicht auf die Schnittebene A-A, wenn der Deckel 16 für eine Bodenbelagsstärke von 8 mm vorbereitet ist. Zwischen einer Unterseite der Isolierschicht 36 bzw. der Bodenplatte 20 und dem horizontalen Schenkel 32 sind nun die Distanzscheiben 46 vorgesehen. Die Distanzscheiben 46 sind dabei in die Aussparung 38 im Rahmen 30 eingesetzt. Die Distanzscheiben 46 sind gegenüber den Distanzscheiben 40 weniger hoch, so dass die Bodenplatte 20 dichter am horizontalen Schenkel 32 des Rahmens 30 liegt und oberhalb der Bodenplatte 20 noch 8 mm Raum zum Einbringen eines Bodenbelags zur Verfügung stehen.

Die Darstellung der Fig. 8 zeigt eine Ansicht auf die Schnittebene A-A, wenn der Deckel 16 für eine Bodenbetagsstarke von 3 mm vorbereitet ist.

In diesem Fall wird zunächst die Distanzscheibe 40 in die Ausnehmung 38 am Rahmen 30 eingesetzt und auf die Distanzscheibe 40 wird noch die Distanzscheibe 46 aufgesetzt. Die Distanzscheibe 40 weist auf ihrer Oberseite eine zentrale Erhöhung auf und die Distanzscheibe 46 weist auf ihrer Unterseite eine zentrale Ausnehmung auf, die auf die Abmessungen der Erhöhung an der Distanzscheibe 40 abgestimmt ist. Die Distanzscheibe 46 kann dadurch auf der Distanzscheibe 40 sicher gehalten werden. Speziell können die Distanzscheiben 40 in einfacher Weise in die Aussparungen 38 eingesetzt werden und werden dann zumindest gegen seitliche Verschiebung in dieser Aussparung 38 gehalten. Auch die Distanzscheiben 46 lassen sich dann in einfacher Weise auf die Distanzscheiben 40 aufsetzen und werden gegen horizontale Verschiebung auf den Distanzscheiben 40 gehalten. Es ist daher auch bei rauem Baustellenbetrieb und leichtem Verkippen des Deckels 16 nicht zu befürchten, dass die Distanzscheiben 40, 46 sich aus ihrer vorgesehenen Stellurig herausbewegen, bevor nicht die Isolierschicht 36 und die Bodenplatte 20 aufgesetzt ist und die Schrauben 44 durch die Distanzscheiben 46, 40 hindurch gesteckt sind.

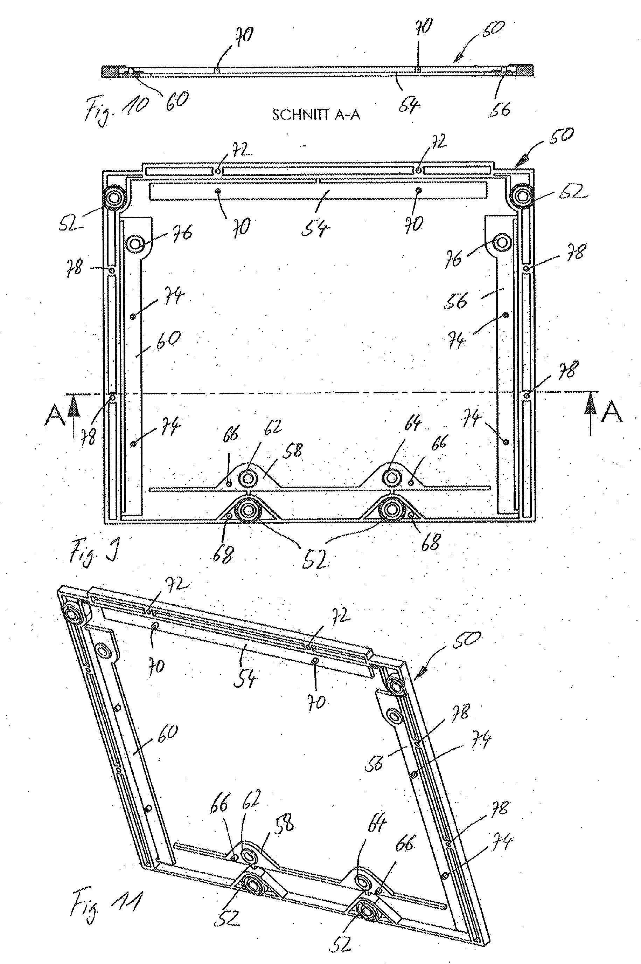

Gemäß einer zweiten Ausführungsform der Erfindung wird zwischen einem Rahmen des Deckels und einer Bodenplatte ein Einlegerahmen als Distanzstück eingesetzt. Ein solcher Einlegerahmen 50 ist in Fig. 9 in einer Draufsicht dargestellt. Der Einlegerahmen 50 wird in den Rahmen 30, siehe Fig. 2, eines Deckels eingesetzt und weist insgesamt vier scheibenförmige Vorsprünge 52 auf, die dann in die Ausnehmungen 38 des Rahmens 30, siehe wieder Fig. 2, eingreifen und den Einlegerahmen 50 dann relativ zum Rahmen 30 des Deckels fixieren. Auf den Einlegerahmen 50 wird dann die Isolierschicht 36 und die Bodenplatte 20 aufgelegt. Durch Einfügen bzw. Herausnehmen des Einlegerahmens 50 kann die Lage der Bodenplatte 20 relativ zum Rahmen 30 verändert werden.

Um mittels des Einlegerahmens 50 unterschiedliche Abstände zwischen dem Rahmen 30 und der Bodenplatte 20 einstellen zu können, weist der Rahmen vier Distanzstreifen 54, 56, 58, 60 auf, die an den Einlegerahmen 50 angespritzt und dadurch einstückig mit diesem ausgebildet sind. Die Distanzstreifen 54, 56, 58, 60 sind über Sollbruchstellen mit dem Einlegerahmen 50 verbunden, so dass sie in einfacher Weise von dem Einlegerahmen 50 abgebrochen werden können. Der Einlegerahmen 50 kann in der in Fig. 9 dargestellten Form in den Rahmen 30 eingelegt werden. Die Distanzstreifen 54, 56, 58, 60 können ohne den Einlegerahtmen 50 unmittelbar auf den Rahmen 30 aufgelegt werden und die Distanzstreifen 54, 56, 58, 60 können auf den Einlegerahmen 50 aufgelegt werden. Dadurch ergeben sich unterschiedliche Möglichkeiten, einen Abstand zwischen dem Rahmen 30 und der Bodenplatte 20 einzustellen.

In der Darstellung der Fig. 11 ist zu erkennen, dass der Distanzstreifen 58 mit zwei ringförmigen Vorsprüngen 62, 64 versehen ist. Diese ringförmigen Vorsprünge 62, 64 können in eine passende, in Fig. 11 nicht erkennbare Ausnehmung auf der Rückseite der Vorsprünge 52 des Einlegerahmens 50 eingreifen, um den Distanzstreifen 58 dadurch unverrückbar am Einlegerahmen 50 zu arretieren. Zusätzlich ist der Distanzstreifen 58 noch mit zwei zapfenförmigen Vorsprüngen 66 versehen, die in passende Ausnehmungen 68 am Einlegerahmen 50 eingreifen können. Der Distanzstreifen 58 kann dadurch zuverlässig auf dem Einlegerahmen 50 gesichert werden. Wenn der Distanzstreifen 58 vom Einlegerahmen 50 abgebrochen wird und auf diesen aufgelegt wird, schafft der Distanzstreifen 58 eine über die gesamte zugeordnete Seitenkante durchgehende Auflagefläche für die Isolierschicht 36 bzw. die Bodenplatte 20. Auch bei hoher Belastung der Bodenplatte 20 ist dadurch keine Verbiegung oder Verwölbung der Bodenplatte 20 zu befürchten.

Der Distanzstreifen 54, der gegenüberliegend dem Distanzstreifen 58 angeordnet ist, ist rechteckförmig ausgebildet und weist ebenfalls zwei Zapfen 70 auf, die in passende Ausnehmungen 72 im Einlegerahmen 50 eingreifen können, wenn der Distanzstreifen 54 auf eine Oberseite des Einlegerahmens 50 aufgesetzt ist.

In ähnlicher Weise sind die Distanzstreifen 56, 60, die einander gegenüberliegend am Einilegerahmen 50 angeordnet sind, mit jeweils zwei Zapfen 74 sowie jeweils einem ringförmigen Vorsprung 76 versehen. Wenn die Distanzstreifen 56, 60 vom Einlegerahmen 50 abgebrochen sind, können sie oben auf den Einlegerahmen 50 aufgelegt werden, so dass die ringförmigen Vorsprünge 76 jeweils in eine Rückseite der Vorsprünge 52 eingreifen und die Zapfen 74 in Durchgangsbohrungen 78 im Einlegerahmen 50 eingreifen. Nach Abbrechen der Distanzstreifen 54, 56, 58, 60 vom Einlegerahmen 50 und Auflegen der Distanzstreifen 54, 56, 58, 60 auf den Einlegerahmen 50 steht dadurch eine sich annähernd über die gesamte Oberseite des Einlegerahmens 50 erstreckende Auflagefläche für die Isolierschicht 36 bzw. die Bodenplatte 20 zur Verfügung. Die Bodenplatte 20 liegt dadurch großflächig und sicher auf dem Einlegerahmen 50 auf und Verwerfungen bei Belastung sind nicht zu befürchten.

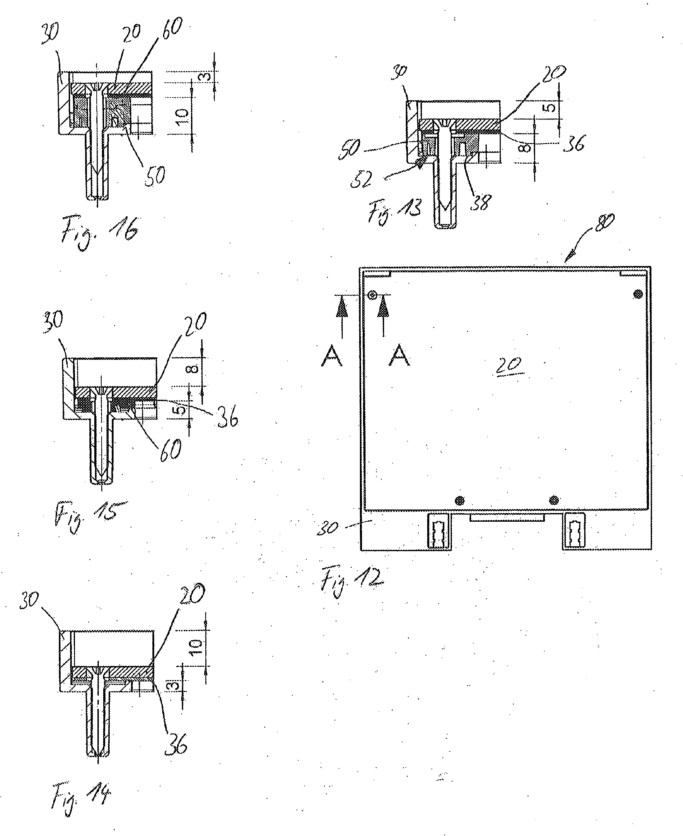

Die Darstellung der Fig. 12 zeigt einen Deckel 80, der einen zum Deckel 16 der Fig. 2 identischen Rahmen 30 aufweist und in den eine zum Deckel 16 identische Bodenplatte 20 mit nicht sichtbarer Isolierschicht 36 eingesetzt ist. Im Unterschied zum Deckel 16 der Fig. 2 ist der Deckel 80 der Fig. 12 mit dem in den Fig. 9 bis 11 dargestellten Einlegerahmen 50 versehen.

Fig. 13 zeigt eine abschnittsweise Ansicht auf die Schnittebene A-A in Fig. 12. Zu erkennen ist, dass sich der scheibenförmige Vorsprung 52 des Einlegerahmens 50 in die passende Ausnehmung 38 am Rahmen 30 erstreckt. Unmittelbar auf den Einlagerahmen 50 aufgelegt ist die Isolierschicht 36 und auf der Isolierschicht 36 liegt die Bodenplatte 20. Oberhalb der Bodenplatte 20 steht zwischen einer Oberkante des Rahmens 30 und einer Oberseite der Bodenplatte 20 ein Abstand von 5 mm zum Einlegen eines Bodenbelags dieser Stärke zur Verfügung.

Soll dahingegen ein dickerer Bodenbelag mit einer Stärke von 10 mm in den Rahmen 30 eingelegt werden, so wird gemäß Fig. 14 der Einlegerahmen 50 vollständig entfernt, so dass die Isolierschicht 36 dann unmittelbar auf dem Rahmen 30 aufliegt und oberhalb der Bodenplatte 20 10 mm zum Einlegen eines Bodenbelags zur Verfügung steht.

Fig. 15 zeigt den Rahmen 30 in einem Zustand, in dem dieser für das Einlegen eines Bodenbelags von 8 mm Stärke vorbereitet ist. Zwischen dem Rahmen 30 und der Isolierschicht 36 sind nun lediglich die Distanzstreifen 54, 56, 58, 60 angeordnet, wobei in der Darstellung der Fig. 50 lediglich der Distanzstreifen 60 zu erkennen ist. Oberhalb der Bodenplatte 20 stehen dadurch 8 mm Abstand bis zur Oberkante des Rahmens 30 für das Einlegen eines Bodenbelags zur Verfügung.

Die Darstellung der Fig. 16 zeigt den Rahmen 30 in einem Zustand, in dem dieser für das Einlegen eines Bodenbelags mit 3 mm Stärke vorbereitet ist. Der Einlegerahmen 50 ist auf dem Rahmen 30 angeordnet und die vom Rahmen 50 abgebrochenen Distanzstreifen 54, 56, 58, 60 sind oben auf den Einlegerahmen 50 aufgelegt. In der Darstellung der Fig. 16 ist lediglich der Distanzstreifen 60 zu erkennen. Gut zu sehen ist in der Darstellung der Fig. 16, dass der ringförmige Vorsprung 76 des Distanzstreifens 60 in eine passende Vertiefung auf der Oberseite des Einlegerahmens 50 eingreift und dadurch in seiner Lage gesichert ist. In Fig. 16 nicht erkennbar sind die Zapfen 74 des Distanzstreifens 60, die, wie bereits anhand der Fig. 9 erläutert wurde, in Ausnehmungen 78 am Einlegerahmen 50 eingreifen. Wie zu erkennen ist, sind nun zwischen einer Oberseite der Bodenplatte 20 und einer Oberkante des Rahmens 30 3mm Abstand zum Einlegen eines Bodenbelags vorhanden.

Indem die Distanzstreifen 54, 56, 58, 60 an den Einlegerahmen 50 angespritzt sind und von diesem in einfacher Weise abgebrochen werden können, kann eine relative Lage von Bodenplatte 20 und Rahmen 30 in sehr einfacher Weise verändert werden. Da die Distanzstreifen 54, 56, 58, 60 an den Einlegerahmen 50 angespritzt sind, stehen sie auch auf der Baustelle zur Verfügung, so dass für eine Veränderung der Bodenbelagstiefe im Rahmen 30 keine separaten Teile benötigt werden. Der Einlegerahmen 50 schafft durch die umlaufende Auflagefläche für die Isolierschicht 36 bzw. die Bodenplatte 20 eine äußerst stabile Auflage, so dass auch bei hoher Belastung keine Verwerfung der Bodenplatte 20 zu befürchten ist. Auch die Distanzstreifen 54, 56, 58, 60 stellen jeweils eine annähernd über die gesamte zugeordnete Kante des Einlegerahmens 50 sich erstreckende Auflagefläche zur Verfügung, so dass auch bei Verwendung der Distanzstreifen 54, 56, 58, 60 eine sehr großflächige und stabile Auflage für die Bodenplatte 20 gewährleistet ist.

Insgesamt wird durch die Erfindung ein flexibel einsetzbarer Geräteeinsatz bereitgestellt, dessen Deckel auf unterschiedliche Boderibeiagshöhen eingerichtet werden kann, wobei die für die vorzunehmende Einstellung erforderlichen Distanzstücke entweder voritiontiert sind oder einstückig an den Rahmen 30 angespritzt sind. Ein Monteur hat damit ohne zusätzliche Bestellung von Ersatzteilen an dem Geräteeinsatz selbst alle erforderlichen Teile zur Verfügung, um erforderlichenfalls selbst die Einstellung auf eine gewünschte Bodenbelagshöhe vornehmen zu können. Die Lagerhaltung der erfindungsgemäßen Geräteeinsätze sowie auch deren Herstellung vereinfacht sich dadurch erheblich.

## Patentansprüche

1. Geräteeinsatz für Installationsgeräte mit einem Deckel (16), wobei der Deckel (16) einen Rahmen (30) zum Aufnehmen eines Bodenbelagsabschnitts aufweist, **dadurch gekennzeichnet, dass** der Deckel (16) eine Bodenplatte (20) aufweist, die lösbar in den Rahmen (30) eingesetzt ist und dass der Rahmen (30) des Deckels (16) eine Durchgangsöffnung aufweist, die mittels der Bodenplatte (20) verschlossen ist, wobei der Rahmen (30) und die Bodenplatte (20) eine Vertiefung (18) zum Aufnehmen des Bodenbelagsabschnitts bilden und wobei wenigstens ein Distanzstück (40, 46, 52; 54, 56, 58, 60) vorgesehen ist, das lösbar zwischen Rahmen (30) und Bodenplatte (20) anordenbar ist.

2. Geräteeinsatz nach einem der vorstehenden Ansprüche, **dadurch gekennzeichnet, dass** der Rahmen (30) mit wenigstens einer Aussparung (38) zum Einsetzen des wenigstens einen Distanzstücks (40, 46; 50, 54, 56, 58, 60) versehen ist.

3. Geräteeinsatz nach einem der vorstehenden Ansprüche, **dadurch gekennzeichnet, dass** mehrere scheibenförmig ausgebildete Distanzstücke (40, 46) vorgesehen sind.

4. Geräteeinsatz nach wenigstens einem der vorstehenden Ansprüche, **dadurch gekennzeichnet, dass** wenigstens ein rahmenförmig ausgebildetes Distanzstück (50) vorgesehen ist.

5. Geräteeinsatz nach einem der vorstehenden Ansprüche, **dadurch gekennzeichnet, dass** mehrere streifenförmig ausgebildete Distanzstücke (54, 56, 58, 60) vorgesehen sind.

6. Geräteeinsatz nach wenigstens einem der vorstehenden Ansprüche, **dadurch gekennzeichnet, dass** das wenigstens eine Distanzstück (40, 46; 50, 54, 56, 58, 60)) eine Erhöhung und/oder eine Vertiefung aufweist.

7. Geräteeinsatz nach einem der vorstehenden Ansprüche, **dadurch gekennzeichnet, dass** wenigstens ein Distanzstück (46) einstückig an den Rahmen (30) angeformt und zwischen Rahmen (30) und Distanzstück (46) eine Sollbruchstelle vorgesehen ist.

8. Geräteeinsatz nach wenigstens einem der vorstehenden Ansprüche, **dadurch gekennzeichnet, dass** wenigstens ein Distanzstück als Einlegerahmen (50) ausgebildet ist, wobei wenigstens ein weiteres Distanzstück (54, 56, 58, 60) einstückig an den Einlegerahmen (50) angeformt und zwischen Einlegerahmen (50) und Distanzstück (54, 56, 58, 60) eine Sollbruchstelle vorgesehen ist.

9. Geräteeinsatz nach Anspruch 8, **dadurch gekennzeichnet, dass** an den Einlegerahmen (50) mehrere Distanzstreifen (54, 56, 58, 60) angeformt sind.

10. Geräteinsatz nach Anspruch 7, 8 oder 9, **dadurch gekennzeichnet, dass** der Rahmen (30) oder Einlegerahmen (50) gemeinsam mit dem wenigstens einen angeformten Distanzstück (46; 54, 56, 58, 60)) und der Sollbruchstelle als Kunststoffspritzgussteil ausgebildet ist.

11. Geräteinsatz nach einem der Ansprüche 5 bis 10, **dadurch gekennzeichnet, dass** wenigstens zwei Distanzstücke unterschiedlicher Stärke an den Rahmen oder den Einlegerahmen angeformt sind.

12. Geräteeinsatz nach einem der vorstehenden Ansprüche, **dadurch gekennzeichnet, dass** der Rahmen (30) im Querschnitt L-förmig ausgebildet ist, wobei die Bodenplatte (20) auf einem horizontalen Schenkel (32) des Rahmens (30), gegebenenfalls unter Zwischenfügen wenigstens eines Distanzstücks (40, 46; 50, 54, 56, 58, 60) aufliegt.

## Claims

1. Device insert for installation devices, comprising a cover (16), wherein the cover (16) has a frame (30) for receiving a section of floor covering, **characterized in that** the cover (16) has a bottom plate (20) which is removably inserted into the frame (30), and **in that** the frame (30) of the cover (16) has a through opening which is closed by means of the bottom plate (20), wherein the frame (30) and the bottom plate (20) form a depression (18) for receiving the section of floor covering, and wherein at least one spacer (40, 46, 52; 54, 56, 58, 60) is provided, which spacer is removably arrangeable between frame (30) and bottom plate (20).

2. Device insert according to any of the preceding claims, **characterized in that** the frame (30) is provided with at least one recess (38) for inserting the at least one spacer (40, 46; 50, 54, 56, 58, 60).

3. Device insert according to any of the preceding claims, **characterized in that** a plurality of disc-type spacers (40, 46) are provided.

4. Device insert according to at least one of the preceding claims, **characterized in that** at least one frame-type spacer (50) is provided.

5. Device insert according to any of the preceding claims, **characterized in that** a plurality of strip-type spacers (54, 56, 58, 60) are provided.

6. Device insert according to at least one of the preceding claims, **characterized in that** the at least one spacer (40, 46; 50, 54, 56, 58, 60) has an elevation and/or a depression.

7. Device insert according to any of the preceding claims, **characterized in that** the at least one spacer (46) is integrally shaped to the frame (30) and a predetermined breaking point is provided between frame (30) and spacer (46).

8. Device insert according to at least one of the preceding claims, **characterized in that** the at least one spacer is an insertion frame (50), wherein at least one further spacer (54, 56, 58, 60) is integrally shaped to the insertion frame (50) and a predetermined breaking point is provided between insertion frame (50) and spacer (54, 56, 58, 60).

9. Device insert according to claim 8, **characterized in that** a plurality of spacer strips (54, 56, 58, 60) are integrally shaped to the insertion frame (50).

10. Device insert according to claim 7, 8 or 9, **characterized in that** the frame (30) or insertion frame (50) together with the at least one integrally shaped spacer (46; 54, 56, 58, 60) and the predetermined breaking point are configured in an injection-molded synthetic material part.

11. Device insert according to any of claims 5 to 10, **characterized in that** at least two spacers of different thickness are integrally shaped to the frame or the insertion frame.

12. Device insert according to any of the preceding claims, **characterized in that** the frame (30) has an L-shaped cross section, wherein the bottom plate (20) rests on a horizontal leg (32) of the frame (30), with at least one spacer (40, 46; 50, 54, 56, 58, 60) interposed, as required.

## Revendications

1. Garniture pour appareils d'installation, dotée d'un couvercle (16), le couvercle (16) présentant un encadrement (30) qui reprend une partie de recouvrement de fond, **caractérisée en ce que** le couvercle (16) présente une plaque de fond (20) insérée de manière libérable dans l'encadrement (30), **en ce que** l'encadrement (30) du couvercle (16) présente une ouverture de passage fermée au moyen de la plaque de fond (20), **en ce que** l'encadrement (30) et la plaque de fond (20) forment un creux (18) qui reprend la partie de recouvrement de fond et **en ce qu'**au moins une pièce d'écartement (40, 46, 52; 54, 56, 58, 60) est prévue et peut être disposée de manière libérable entre l'encadrement (30) et la plaque de fond (20).

2. Garniture pour appareils d'installation selon la revendication précédente, **caractérisée en ce que** l'encadrement (30) est doté d'au moins une découpe (38) qui permet d'insérer la ou les pièces d'écartement (40, 46; 50, 54, 56, 58, 60).

3. Garniture pour appareils d'installation selon l'une des revendications précédentes, **caractérisée en ce que** plusieurs pièces d'écartement (40, 46) en forme de plaque sont prévues.

4. Garniture pour appareils d'installation selon l'une des revendications précédentes, **caractérisée en ce qu'**au moins une pièce d'écartement (50) en forme d'encadrement est prévue.

5. Garniture pour appareils d'installation selon l'une des revendications précédentes, **caractérisée en ce que** plusieurs pièces d'écartement (54, 56, 58, 60) en forme de ruban sont prévues.

6. Garniture pour appareils d'installation selon l'une des revendications précédentes, **caractérisée en ce qu'**au moins une pièce d'écartement (40, 46; 50, 54, 56, 58, 60) présente un rehaussement et/ou un creux.

7. Garniture pour appareils d'installation selon l'une des revendications précédentes, **caractérisée en ce qu'**au moins une pièce d'écartement (46) est formée d'un seul tenant avec l'encadrement (30) et **en ce qu'**un emplacement de rupture préférentielle est prévu entre l'encadrement (30) et la pièce d'écartement (46).

8. Garniture pour appareils d'installation selon l'une des revendications précédentes, **caractérisée en ce qu'**au moins une pièce d'écartement est configurée comme encadrement d'insertion (50), au moins une autre pièce d'écartement (54, 56, 58, 60) étant formée d'un seul tenant sur l'encadrement d'insertion (50) et un emplacement de rupture préférentielle étant prévu entre l'encadrement d'insertion (50) et la pièce d'écartement (54, 56, 58, 60).

9. Garniture pour appareils d'installation selon la revendication 8, **caractérisée en ce que** plusieurs rubans d'écartement (54, 56, 58, 60) sont formés sur l'encadrement d'insertion (50).

10. Garniture pour appareils d'installation selon les revendications 7, 8 ou 9, **caractérisée en ce que** l'encadrement (30) ou l'encadrement d'insertion (50) sont configurés comme pièces en matière synthétique coulée par injection, en même temps que la ou les pièces d'écartement (46; 54, 56, 58, 60) qui sont formées et que l'emplacement de rupture préférentielle.

11. Garniture pour appareils d'installation selon l'une des revendications 5 à 10, **caractérisée en ce qu'**au moins deux pièces d'écartement d'épaisseurs différentes sont formées sur l'encadrement ou sur l'encadrement d'insertion.

12. Garniture pour appareils d'installation selon l'une des revendications précédentes, **caractérisée en ce que** l'encadrement (30) présente en section transversale la forme d'un L, la plaque de fond (20) reposant sur une branche horizontale (32) de l'encadrement (30), éventuellement après avoir intercalé au moins une pièce d'écartement (40, 46; 50, 54, 56, 58, 60).
